# EUROPÄISCHE PATENTSCHRIFT

(11) **EP 0 882 896 B1**
(45) Veröffentlichungstag und Bekanntmachung des Hinweises auf die Patenterteilung: **02.05.2003**
(21) Anmeldenummer: 98100828.7
(22) Anmeldetag: 20.01.1998
(51) Int. Cl.: F15B 15/26, G01N 27/28

(54) **Wechselarmatur mit einem Sensor**
Changeover fitting with a sensor
Armature d'échangement avec un capteur

(30) Priorität: 04.06.1997 CH 133597
(43) Veröffentlichungstag der Anmeldung: 09.12.1998
(73) Patentinhaber: Mettler-Toledo GmbH, 8606 Greifensee (CH)
(72) Erfinder: Sileno, Carmine, 8307 Effretikon (CH); Nguyen, Minh Nghiem, 8957 Spreitenbach (CH); Eng, Peter, 8105 Regensdorf (CH)

(56) Entgegenhaltungen:
- EP-A- 0 545 177
- EP-A- 0 590 290
- DE-U- 9 109 115
- US-A- 4 997 160

## Beschreibung

### Technisches Gebiet

Die Erfindung betrifft eine Wechselarmatur mit einem Sensor gemäss Oberbegriff des Anspruches 1.

### Stand der Technik

Eine Wechselarmatur der eingangs genannten Art ist beispielsweise aus der EP-A-0 590 290 bekannt. Die Wechselarmatur enthält einen Sensor, der herausnehmbar in einem Tauchrohr angeordnet ist, welches in einem Gehäuse zwischen einer eingefahrenen Ruhestellung und einer ausgefahrenen Arbeitsstellung axial verschiebbar ist. Eine pneumatische Antriebsvorrichtung dient zum Verschieben des Tauchrohres zwischen den beiden Stellungen. Ferner ist die Wechselarmatur mit einer Sicherungsvorrichtung ausgestattet, die ein axiales Verschieben des Tauchrohres verhindert, wenn kein Sensor eingesetzt ist. Die Sicherungsvorrichtung wird gebildet durch eine Durchtrittsöffnung im Tauchrohr, die den Druckraum in einem Zylinder auf der einem Messwertgeber abgewandten Seite des Kolbens mit dem Inneren des Tauchrohres verbindet. Wenn nun kein Sensor eingesetzt ist, kann die Druckluft aus dem Zylinder ungehindert durch die Durchtrittsöffnung entweichen, so dass im Zylinder kein Druckaufbau stattfinden und das Tauchrohr nicht betätigt werden kann. Diese Ausbildung hat verschiedene Nachteile. Da die Sicherungsvorrichtung nur bei pneumatischem Betrieb wirksam ist, kann das Tauchrohr mit oder ohne Sensor gegebenenfalls auch von Hand verschoben werden, wobei bei fehlendem Sensor BehandlungsGut in die Wechselarmatur gelangen und dadurch Schaden verursachen kann. Bei pneumatischem Betrieb kann sich ohne eingebautem Sensor und bei fortgesetztem Aufpumpen der Druck durch ungünstige Verhältnisse trotzdem so aufbauen, dass dennoch der Kolben des Tauchrohres betätigt und das leere Tauchrohr in Arbeitsstellung bewegt wird. Dies hat zur Folge, dass ebenfalls Behandlungsgut aus dem Behandlungsbehälter durch das leere Tauchrohr austreten kann. Selbst im Normalbetrieb kann durch Leckstellen zwischen dem Sensor und dem Tauchrohr Gut aus dem Behandlungsbehälter durch die Durchtrittsöffnung in den Zylinderraum gelangen und diesen verunreinigen oder durch chemische Reaktionen überdies beschädigen. Umgekehrt kann Druckluft durch die selben Leckstellen den Behandlungsbehälter aufpumpen, wodurch einerseits die Anlage gefährdet werden kann und andererseits verunreinigte Druckluft in das zu behandelnde Gut gelangen und dadurch die hygienischen Verhältnisse oder den Reaktionsablauf stören kann.

### Darstellung der Erfindung

Aufgabe der Erfindung ist es, eine Wechselarmatur der eingangs genannten Art so auszubilden, dass die erwähnten Nachteile vermieden sind.

Die Aufgabe wird erfindungsgemäss gelöst durch die kennzeichnenden Merkmale des Anspruches 1. Dadurch, dass die Sicherungsvorrichtung auf der Aussenseite des Tauchrohres und gegenüber der Innenseite des Tauchrohres mediumsdicht ausgebildet ist, kann weder von der Aussenseite des Tauchrohres Medium in das Innere des Tauchrohres und damit in den Behandlungsbehälter gelangen, noch kann umgekehrt Behandlungsgut durch das Tauchrohr nach aussen austreten. Somit ist der Behandlungsbehälter vor mechanischen Belastungen bewahrt und das Behandlungsgut erleidet keine unerwünschten Verunreinigungen. Umgekehrt kann kein Behandlungsgut nach aussen in die Wechselarmatur gelangen und diese verunreinigen oder beschädigen oder an die Umgebung austreten.

Vorteilhafte Ausgestaltungen der Wechselarmatur werden in den abhängigen Ansprüchen 2 bis 12 beschrieben.

Eine besonders vorteilhafte Ausbildung der Sicherungsvorrichtung umschreibt Anspruch 2. Der hülsenartig ausgebildete Sicherheitsschieber trennt den zum Einsetzen des Sensor dienenden Raum nach aussen hin ab und stellt somit sicher, dass kein Gut auf die Aussenseite des Sicherheitsschiebers gelangen kann. Die Sicherungsvorrichtung nach Anspruch 2 ist unabhängig von der Betätigungsart des Tauchrohres und kann sowohl für eine Wechselarmatur verwendet werden, die von Hand betätigt wird, wie auch für eine solche, die mittels einer fluidbetriebenen Antriebsvorrichtung zum Ein- und Ausfahren des Tauchrohres ausgestattet ist. Besonders zweckmässig ist eine Weiterbildung nach Anspruch 3, wobei der als Kolben ausgebildete Abschnitt die Führung für das Sperrelement verbessert. Ausserdem verbessert der als Kolben ausgebildete Abschnitt des Tauchrohres die Führung des Tauchrohres im Gehäuse.

Der Anspruch 4 beschreibt eine vorzugsweise Weiterbildung der Wechselarmatur, die mittels einer fluidbetriebenen Antriebsvorrichtung zum Ein- und Ausfahren des Tauchrohres ausgestattet ist. Dabei ist eine Weiterbildung nach Anspruch 5 von Vorteil, denn ein zur Betätigung eingeleitetes Fluid kann hinter dem Kolben keinen zum Verschieben des Tauchrohres ausreichenden Druck aufbauen, da das Fluid durch die Ableitung entweicht. Das durch die Ableitung entweichende Fluid kann als Anzeichen des nicht vorhandenen oder nicht korrekt montierten Sensors dienen. Dabei kann das entweichende Fluid zur Betätigung einer weiteren Steuereinrichtung wie beispielsweise zur Erzeugung eines Fehlersignals verwendet werden. Besonders vorteilhaft ist eine Weiterbildung nach Anspruch 11, da durch das Zurückführen des Fluids an die erste Fluidleitung, welche zum Zurückführen des Sensors in die Ruhestellung dient, die Sicherung des Tauchrohres in der Sperrstellung weiter verbessert wird. Im einfachsten Falle kann das Fluid gemäss Anspruch 10 an die Umgebung entweichen, insbesondere wenn als Fluid gemäss Anspruch 9 Druckluft verwendet wird. Ein besonders vorteilhafte Fluidführung zur Ableitung beschreibt Anspruch 6, wodurch auch die Abdichtung des Sicherheitsschiebers verbessert wird. Zweckmässigerweise ist die Wechselarmatur nach Anspruch 7 oder 8 weitergebildet.

Als Fluid kann gegebenenfalls eine Flüssigkeit wie Hydrauliköl verwendet werden. Besonders bevorzugt ist jedoch die Verwendung von Druckluft nach Anspruch 9. Diese Ausgestaltung ermöglicht eine zusätzliche Sicherung dadurch, dass eine bei nicht vorhandenem oder unzureichend montiertem Sensor zugeführte Druckluft gemäss Anspruch 10 auf einfache Weise und unbedenklich an die Umgebung abgelassen werden kann, wodurch ein Druckaufbau, der den Kolben in Arbeitsstellung vorschieben könnte, verhindert wird.

Wird die Wechselarmatur von Hand betrieben, so ist eine Ausgestaltung der Wechselarmatur nach Anspruch 12 bevorzugt, wodurch die Wechselarmatur in eingefahrener wie in ausgefahrener Stellung arretiert werden kann. Die Arretiervorrichtung kann gegebenfalls auch zusätzlich zu einer fluidbetätigten Antriebsvorrichtung vorgesehen sein.

### kurze Beschreibung der Zeichnungen

Ausführungsbeispiele des Gegenstandes der Erfindung werden nachfolgend anhand der Zeichnungen näher beschrieben, dabei zeigen:
- Figur 1: eine erste Wechselarmatur mit einem von Hand betätigbaren, aus- und einfahrbaren Tauchrohr, wobei die obere Hälfte die Sperrstellung und die untere Hälfte die Freistellung einer Sicherheitsvorrichtung darstellen, in vertikalem Längsschnitt;
- Figur 2: die Sicherheitsvorrichtung der Wechselarmatur der Figur 1 in grösserem Massstab;
- Figur 3: eine zweite Wechselarmatur mit einer fluidbetätigbaren Antriebsvorrichtung für das Tauchrohr, wobei die obere Hälte die Freistellung und die untere Hälfte die Sperrstellung einer Sicherheitsvorrichtung dargestellen;
- Figur 4: die Sicherheitsvorrichtung der Wechselarmatur der Figur 3 in grösserem Massstab.

### Wege zur Ausführung der Erfindung und gewerbliche Anwendbarkeit

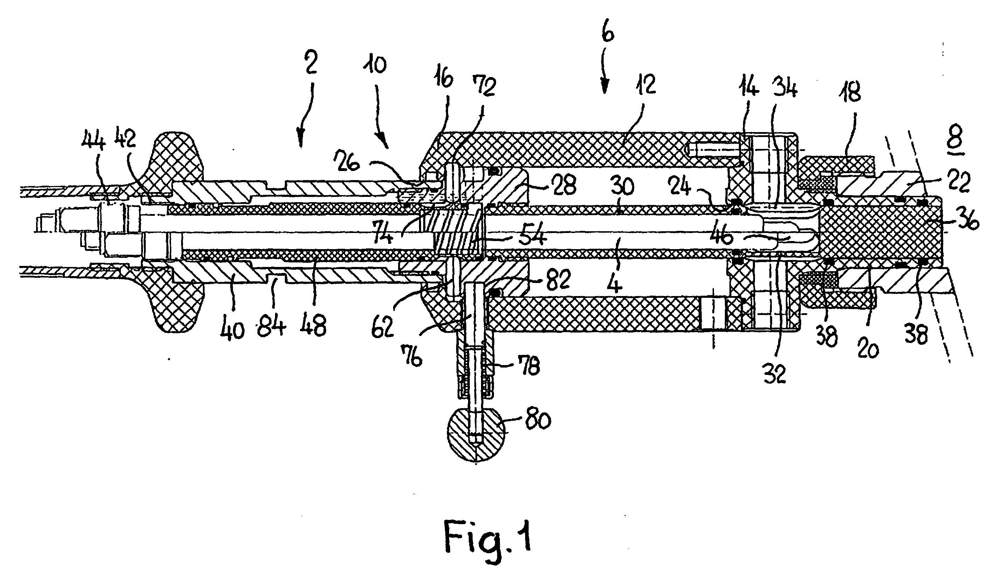

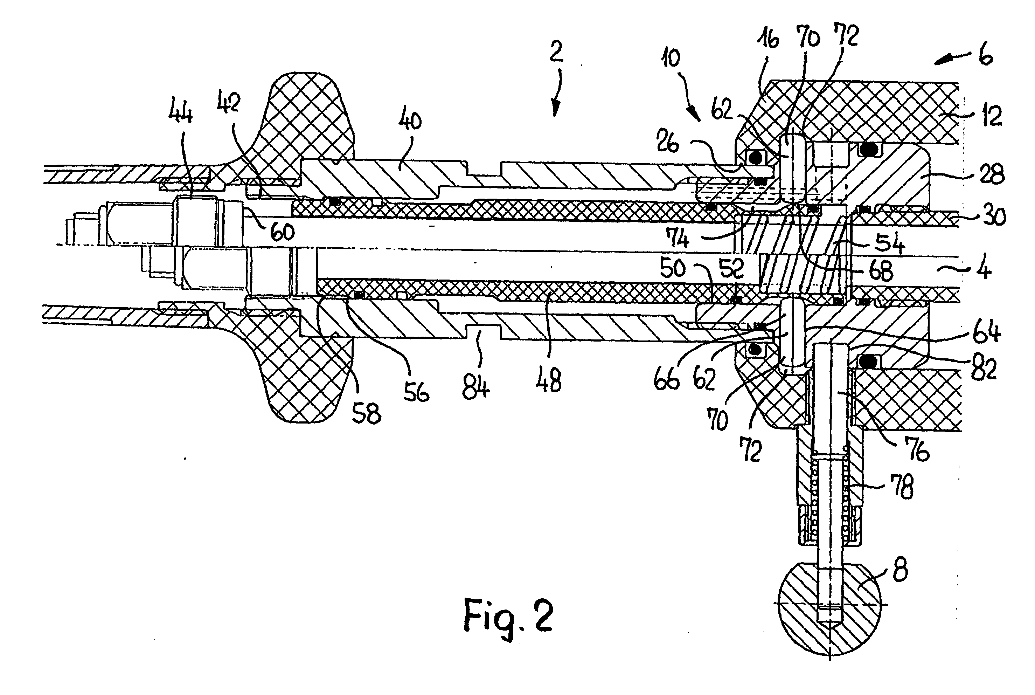

Die Figuren 1 und 2 zeigen ein erstes Ausführungsbeispiel einer Wechselarmatur mit einem in einem Tauchrohr 2 angeordneten Sensor 4, der beispielsweise eine GEL-Elektrode ist. Das Tauchrohr 2 und damit der Sensor 4 sind bezüglich eines Gehäuses 6 zwischen einer eingefahrenen Ruhestellung und einer ausgefahrenen Arbeitsstellung axial verschiebbar. In der in Figur 1 dargestellten Ruhestellung befinden sich das Tauchrohr 2 und der Sensor 4 innerhalb des Gehäuses 6. In der nicht näher dargestellten Arbeitsstellung ist das Tauchrohr 2 mit dem Sensor 4 ausgefahren und taucht in einen Behälter 8 zur Ermittlung von Messwerten ein. Die Wechselarmatur ist noch mit einer Sicherheitsvorrichtung 10 ausgestattet, die auf der Aussenseite des Tauchrohres 2 angeordnet und gegenüber der Innenseite des Tauchrohres mediumsdicht ausgebildet ist und dazu dient, das Ausfahren des Tauchrohres zu verhindern, wenn kein Sensor eingesetzt ist.

Wie aus den Figuren hervorgeht, besteht das Gehäuse 6 im wesentlichen aus einem zylindrischen Mantel 12 mit einem äusseren Kopfteil 14 und einem inneren Kopfteil 16. An letzterem sind ein Kupplungsteil 18, beispielsweise in Form einer Überwurfmutter oder eines Bajonettverschlusses, sowie ein Anschlussstutzen 20 angeordnet, um die Wechselarmatur an einem entsprechenden Stutzen 22 des Behälters 8 zu befestigen, wobei dann der Anschlussstutzen 20 durch eine entsprechende Öffnung in das Innere des Behälters 8 ragt.

Im Gehäuse 6 ist das Tauchrohr 2 in axialer Richtung verschiebbar gelagert, wobei es durch eine entsprechende Öffnung 24 im äusseren Kopfstück 14 und eine Öffnung 26 im inneren Kopfstück 16 geführt ist. Das Tauchrohr wird gebildet durch einen im Zylinder verschieblichen Kolben 28, an dem ein innerer Rohrteil 30 befestigt ist, welcher am äusseren Ende einen Käfig 32 mit Durchtrittsöffnungen 34 aufweist und durch einen geschlossenen Endteil 36 abgeschlossen ist, der in der dargestellten Ruhestellung über entsprechende Dichtungsringe 38 einen mediumsdichten Abschluss in dem Anschlussstutzen bildet. Auf der dem inneren Rohrteil 30 gegenüberliegenden Seite des Kolbens 28 wird das Tauchrohr gebildet durch einen äusseren Rohrteil 40, dessen Ende die Einsetzseite für den Sensor bildet. Hierzu enthält das Tauchrohr beziehungsweise dessen äusserer Rohrteil 40 ein Innengewinde 42, in welches der Sensor 4 mittels eines Aussengewindes 44 eingeschraubt ist, um den Sensor im Tauchrohr derart zu halten, dass sein Messkopf 46 im Käfig 32 des Tauchrohres angeordnet ist.

Die Sicherheitsvorrichtung 10 zum Verhindern der Betätigung des Tauchrohres 2, wenn kein Sensor 4 oder ein Sensor allenfalls ungenügend eingesetzt ist, ist wie folgt aufgebaut.

Der äussere Rohrteil 40 des Tauchrohres ist hinsichtlich des äusseren und inneren Durchmessers so gestaltet, dass er koaxial im Inneren einen hülsenartigen Sicherheitsschieber 48 aufnimmt, in dessen Innerem der Sensor 4 geführt ist. Der Sicherheitsschieber ist in einer Ausnehmung 50 des Kolbens 28 verschieblich eingesetzt, mittels Dichtungsringen 52,53 nach aussen abgedichtet und mittels einer Feder 54 gegen das Einsetzende des äusseren Rohrteiles 40 vorgespannt. Bei nichteingesetztem Sensor 4 steht der Sicherheitsschieber 48 mit einem umlaufenden Absatz 56 an einem entsprechenden innenliegenden umlaufenden Absatz 58 des äusseren Rohrteiles 40 an. Beim Einsetzen des Sensors 4 verschiebt dieser mittels eines radial vorstehenden Absatzes 60 den vorgespannten Sicherheitsschieber 48 in die Freistellung, wie die untere Hälften der Figuren zeigen.

Der Sicherheitsschieber 48 wirkt mit einem Sperrelement 62 zusammen, das im Kolben 28 in radialen Bohrungen 64 verschieblich geführt ist. In der in der oberen Hälfte der Figuren 1 und 2 gezeigten Sperrstellung steht das innere Ende 66 des Sperrelements 62 am Mantel 68 des Sicherheitsschiebers an, der das äussere Ende 70 des Sperrelements 62 in einer Sperrausnehmung 72 im Gehäuse 6 hält und dadurch ein Verschieben des Tauchrohres 2 relativ zum Gehäuse 6 verhindert. Ist der Sensor 4 ordnungsgemäss eingesetzt, so verdrängt er den Sicherheitsschieber entgegen der Kraft der Feder 54 in die Freistellung, in der das Sperrelement 62 mit seinem inneren Ende 66 in eine Aufnahmenut 74 des Sicherheitsschiebers 48 eingreift und dadurch mit seinem äusseren Ende 70 aus der Sperrausnehmung 72 des Gehäuses 6 frei kommt. In dieser Freistellung des Sicherheitsschiebers 48 kann das Tauchrohr 2 in die Arbeitsstellung verschoben werden, sobald auch noch ein Arretierbolzen 76 gelöst ist. Hierzu muss der Arretierbolzen 76 entgegen der Kraft einer Feder 78 mittels eines Handgriffes 80 aus einer Arretierausnehmung 82 im Kolben 28 angehoben werden. Das Tauchrohr 2 ist jetzt axial verschiebbar und kann in der Arbeitsstellung wiederum arretiert werden, indem der Arretierbolzen 76 in eine zweite Arretierausnehmung 84 eingreift, die in entsprechendem Abstand von der ersten Arretierausnehmung 82 im äusseren Rohrteil 40 angeordnet ist. Das Einfahren des Tauchrohres 2 und damit des Sensors 4 aus der Arbeitsstellung in die Freistellung sowie das Arretieren mittels des Arretierbolzens und das Sichern des Sicherheitsschiebers mittels des Sperrelementes erfolgen in umgekehrter Richtung und Reihenfolge zum Ausfahren.

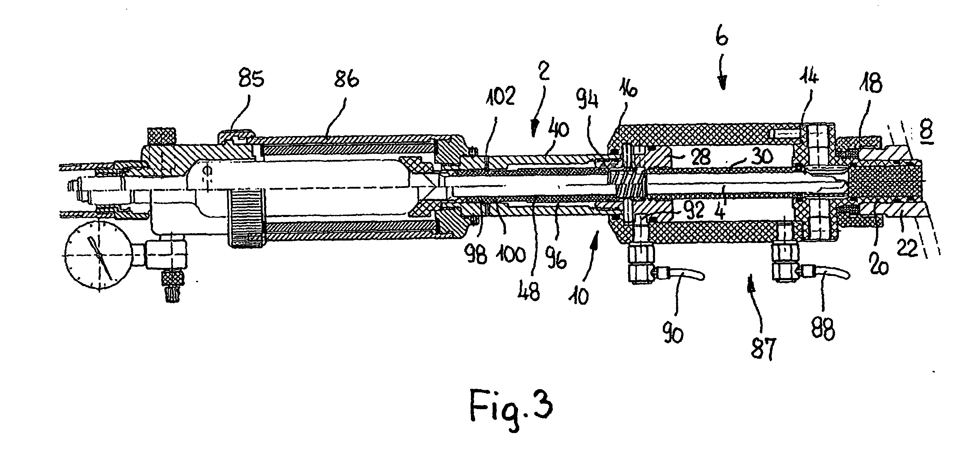

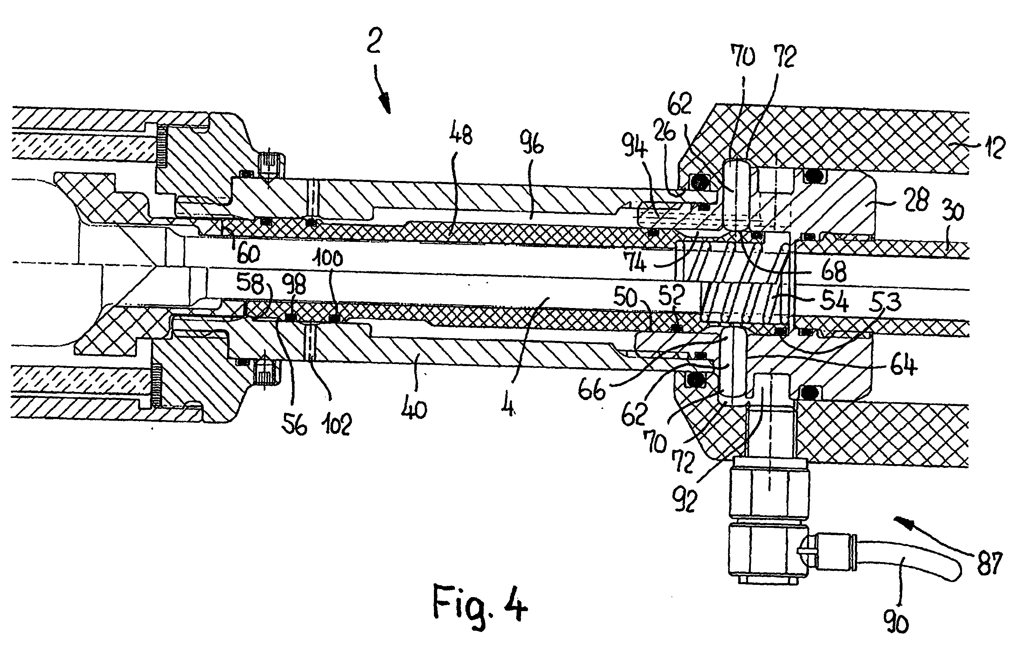

Die Figuren 3 und 4 zeigen die gleiche Wechselarmatur, sodass gleiche Teile mit gleichen Bezugszeichen versehen sind. Als Sensor 4 ist in diesem Beispiel eine Flüssigelektrolyt-Elektrode im Tauchrohr 2 eingesetzt dargestellt, wobei der Sensor 4 mittels eines Schraubringes 85 an einer gehäuseartigen Verlängerung 86 des äusseren Rohrteiles 40 eingespannt ist. Im Gegensatz zu der Wechselarmatur der Figuren 1 und 2 ist die Wechselarmatur der Figuren 3 und 4 nicht mehr handbetrieben sondern mit einer fluidbetätigbaren Antriebsvorrichtung 87 versehen, die vorzugsweise mit Druckluft als Fluid betätigbar ist. Der Sperrbolzen 76 ist nichtmehr erforderlich.

Am Gehäuse 6 sind zwei Fluidleitungen 88,90 angeschlossen, die mit einer nicht näher dargestellten Fluidquelle verbunden sind. Die dem vorderen Ende zugewandte erste Fluidleitung 88 dient zum Einfahren des Tauchrohres 2 und damit des Sensors 4 aus der Arbeitsstellung in die Ruhestellung und die am inneren Ende des Gehäuses angeordnete zweite Fluidleitung 90 zum Ausfahren des Tauchrohres in die Arbeitsstellung. Mit der zweiten Fluidleitung 90 kommuniziert eine Ringnut 92 im Kolben 28, die über einen Verbindungskanal 94 im Kolben mit der Rückseite des Kolbens verbunden ist. Dort mündet der Verbindungskanal 94 in eine Ringkammer 96, die zwischen dem Sicherheitsschieber 48 und dem äusseren Rohrteil 40 ausgebildet ist. Die Sicherheitsvorrichtung 10 des Ausführungsbeispiels der Figuren 1 und 2 ist nun derart weitergebildet, dass der Sicherheitsschieber 48 auf seiner Aussenseite zwei mit Abstand voneinander angeordnete Dichtungsringe 98,100 enthält, denen im äusseren Rohrteil 40 eine Ableitung 102 derart zugeordnet ist, dass bei in Sperrstellung befindlichem Sicherheitsschieber die Ringkammer 96 mit der Ableitung 102 kommuniziert, wie dies in der oberen Hälfte der Figuren 3 und 4 dargestellt ist. Falls der Sensor 4 nicht eingesetzt ist entweicht über die zweite Fluidleitung 90 zugeführtes Fluid über den Verbindungskanal 94 und die Ringkammer 96 in die Ableitung 102, sodass sich hinter dem Kolben 28 kein Druck zur Betätigung des Tauchrohres aufbauen kann. Das Tauchrohr wird zusätzlich wie im Ausführungsbeispiel der Figuren 1 und 2 durch die Sperrelemente 62 gesichert. Sobald jedoch der Sensor 4 ordnungsgemäss eingesetzt ist, werden der Sicherheitsschieber 48 und damit die Dichtungsringe 98,100 soweit verschoben, dass sich die Ableitung 102 zwischen den Dichtungsringen 98,100 befindet und damit gegenüber der Ringkammer 96 abgedichtet ist. Ausserdem werden die Sperrelemente 62 aus der Sperrstellung in die Freistellung gebracht. In der Freistellung des Sicherheitsschiebers 48 kann aus der Ringkammer 96 kein Fluid in die Ableitungen 102 entweichen, sondern sich ein entsprechender Arbeitsdruck auf der Rückseite des Kolbens 28 aufbauen und das Tauchrohr 2 und damit den Sensor 4 in die Arbeitsstellung ausfahren.

Die Ableitungen 102 münden vorzugsweise in die Atmosphäre. Sie kann aber auch in nicht näher dargestellter Weise mit einer Signalvorrichtung und/oder einer Steuervorrichtung für das Fluid verbunden sein. Die Sicherheit der Wechselarmatur lässt sich weiter verbessern, wenn die Ableitung 102 in nicht näher dargestellter Weise mit der ersten Fluidleitung 88 verbunden ist, dann wirkt das aus der Ableitung 102 austretende Fluid auf die andere Seite des Kolbens 28 und spannt diesen und damit das Tauchrohr in die Ruhestellung vor.

In weiterer Abwandlung des Ausführungsbeispieles der Figuren 3 und 4 kann die zweite Fluidleitung das Fluid über ein mit einem Durchtrittskanal versehenes Sperrelement zuführen. Der Durchtrittskanal mündet in Freistellung des Sicherheitsschiebers in die Aufnahmenut 74, welche mit der Ringkammer 96 kommuniziert. In diesem Falle entfällt der Dichtungsring 52.

Der Begriff Sensor sei hier in der allgemeinsten Form verstanden und beinhaltet verschiedenste Geber für verschiedenste physikalische Grössen, wie Temperatur, Druck und Leitfähigkeit und Trübung, als auch zur Erfassung chemischer Werte, wie beispielsweise des pH-Wertes oder des Sauerstoffes in chemischen Prozessen. Solche Wechselarmaturen und Sensoren lassen sich auf den verschiedensten Gebieten einsetzen, wie beispielsweise in der chemischen Produktion, Biotechnologie, Lebensmittelindustrie, Papierindustrie, Abwasserbehandlung, Kläranlagen, Faulschlammbehandlung, Wasseraufbereitung, elektrodenkritische Prozesse, Tankabfüllungsanlagen, Kraftwerke, automatisierte pH-Messung und dergleichen.

### BEZUGSZEICHENLISTE

- 2: Tauchrohr
- 4: Sensor
- 6: Gehäuse
- 8: Behälter
- 10: Sicherheitsvorrichtung
- 12: zylindrischer Mantel
- 14: Kopfstück aussen
- 16: Kopfstück innen
- 18: Kupplungsstück
- 20: Anschlussstutzen
- 22: Stutzen
- 24: Öffnung
- 26: Öffnung
- 28: Kolben
- 30: inneres Rohrteil
- 32: Käfig
- 34: Durchtrittsöffnung
- 36: Endteil
- 38: Dichtungsring
- 40: äusseres Rohrteil
- 42: Innengewinde
- 44: Aussengewinde
- 46: Messkopf
- 48: Sicherheitsschieber
- 50: Ausnehmung
- 52: Dichtungsring
- 53: Dichtungsring
- 54: Feder
- 56: Absatz von 48
- 58: Absatz von 40
- 60: Absatz von 4
- 62: Sperrelement
- 64: Bohrung
- 66: inneres Ende
- 68: Mantel
- 70: äusseres Ende
- 72: Sperrausnehmung
- 74: Aufnahmenut
- 76: Arretierbolzen
- 78: Feder
- 80: Handgriff
- 82: Arretierausnehmung
- 84: Arretierausnehmung
- 85: Schraubring
- 86: Verlängerung von 40
- 87: Antriebsvorrichtung
- 88: Fluidleitung erste
- 90: Fluidleitung zweite
- 92: Ringnut
- 94: Verbindungskanal
- 96: Ringkammer
- 98: Dichtungsring
- 100: Dichtungsring
- 102: Ableitung

## Patentansprüche

1. Wechselarmatur mit einem Sensor (4), der herausnehmbar in einem Tauchrohr (2) angeordnet ist, welches zusammen mit dem Sensor in einem Gehäuse (6) zwischen einer eingefahrenen Ruhestellung und einer ausgefahrenen, in ein zu erfassendes Behandlungsgut eintauchenden Arbeitsstellung axial verschiebbar ist, sowie mit einer Sicherungsvorrichtung (10), die ein axiales Verschieben des Tauchrohres (2) verhindert, wenn kein Sensor (4) eingesetzt ist, **dadurch gekennzeichnet, dass** die Sicherungsvorrichtung (10) auf der Aussenseite des Tauchrohres (2) angeordnet und gegenüber dem Behandlungsgut auf der Innenseite des Tauchrohrs dicht ausgebildet ist.

2. Wechselarmatur nach Anspruch 1, **dadurch gekennzeichnet, dass** die Sicherungsvorrichtung (10) einen im Inneren des Tauchrohres (2) angeordneten, den Sensor (4) hülsenartig umgebenden Sicherheitsschieber (48) aufweist, der mittels einer Feder (54) gegen die Einsatzseite des Sensors (4) vorgespannt ist und in Sperrstellung an einem Anschlag (58) im Tauchrohr (2) ansteht und beim Einsetzen des Sensors (4) gegen die Federkraft in Freistellung bewegbar ist, wobei der Sicherheitsschieber (48) auf der der Einsatzseite abgewandten Seite mit einem Sperrelement (62) zusammenwirkt, das radial verschieblich im Tauchrohr (2) angeordnet ist und in Sperrstellung des Sicherheitsschiebers (48) mit seinem inneren Ende (66) am Mantel des Si cherheitsschiebers (48) ansteht und mit seinem äusseren Ende (70) in eine Sperrausnehmung (72) im Gehäuse (6) eingreift beziehungsweise in Freistellung des Sicherheitsschiebers (48) mit dem inneren Ende (66) in eine Aufnahmenut (74) im Sicherheitsschieber (48) eingreift und mit seinem äusseren Ende (70) aus der Sperrausnehmung (72) des Gehäuses (6) frei kommt.

3. Wechselarmatur nach Anspruch 2, **dadurch gekennzeichnet, dass** das Sperrelement (62) in einem als Kolben (28) ausgebildeten Abschnitt des Tauchrohres (2) angeordnet ist.

4. Wechselarmatur nach Anspruch 3, **dadurch gekennzeichnet, dass** sie eine mittels Fluid betriebene Antriebsvorrichtung (87) zum Ein- und Ausfahren des Tauchrohres (2) aufweist, wobei das Tauchrohr (2) mittels des Kolbens (28) in einem zylindrischen Gehäuseteil (12) zwischen der eingefahrenen Ruhestellung und der ausgefahrenen Arbeitsstellung hinund herfahrbar ist, wobei den Stellungen eine erste bzw. zweite Fluidleitung (90,88) zugeordnet sind.

5. Wechselarmatur nach Anspruch 4, **dadurch gekennzeichnet, dass** der Sicherheitsschieber (48) in Sperrstellung bei nicht oder nicht richtig eingesetztem Sensor (4) die zweite Fluidleitung (90) für das Ausfahren des Tauchrohres (2) mit einer Ableitung (102) verbindet.

6. Wechselarmatur nach Anspruch 5, **dadurch gekennzeichnet, dass** der Sicherheitsschieber (48) auf der Aussenseite einen gegen die Innenseite des Sicherheitsschiebers (48) abgedichteten Kanal (96) aufweist, der an einem Ende mit der zweiten Fluidleitung (90) in Verbindung steht und am anderen Ende mit einem Dichtungsring (98,100) abgeschlossen ist, der in Sperrstellung des Sicherheitsschiebers (48) eine Verbindung zwischen dem Kanal (96) und der Ableitung (102) freigibt und in Freistellung schliesst.

7. Wechselarmatur nach Anspruch 6, **dadurch gekennzeichnet, dass** die zweite Fluidleitung (90) in einen radialen Kanal (92) im Kolben (28) mündet, der über einen axialen Verbindungskanal (94) mit dem Kanal (96) des Sicherheitsschiebers (48) verbunden ist.

8. Wechselarmatur nach Anspruch 6, **dadurch gekennzeichnet, dass** die zweite Fluidleitung (90) in ein mit einem Durchtrittskanal versehenes Sperrelement mündet, das in eine Verbindungsausnehmung des Sicherheitsschiebers mündet, wenn dieser sich in Freistellung befindet, wobei diese Verbindungsausnehmung mit dem Kanal (96) kommuniziert.

9. Wechselarmatur nach einem der Ansprüche 4 bis 8, **dadurch gekennzeichnet, dass** das Fluid Druckluft ist.

10. Wechselarmatur nach einem der Ansprüche 5 bis 9, **dadurch gekennzeichnet, dass** die Ableitung (102) in die Umgebung mündet.

11. Wechselarmatur nach einem der Ansprüche 5 bis 9, **dadurch gekennzeichnet, dass** die Ableitung (102) mit der ersten Fluidleitung (88) verbunden ist.

12. Wechselarmatur nach einem der Ansprüche 1 bis 10, **dadurch gekennzeichnet, dass** das Tauchrohr (2) von Hand aus- und einfahrbar ist und einen mittels eines Handgriffes (80) aus einer Sperrstellung in eine Freistellung bewegbaren Arretierbolzen (76) aufweist, der das Gehäuse (6) radial durchdringt und in Sperrstellung in das Tauchrohr (2) ragt, wobei das Tauchrohr zwei mit Abstand voneinander angeordnete Arretierausnehmungen (82,84) aufweist, die der eingefahrenen beziehungsweise der ausgefahrenen Stellung des Tauchrohres (2) zugeordnet sind.

## Claims

1. Exchange assembly comprising a sensor probe (4) that is removably installed in an immersion tube (2), said immersion tube being axially movable together with the sensor probe in a housing (6) between a retracted rest position and a deployed working position, where the working position is immersed in a process medium that is to be investigated, and further comprising a safety device (10) that locks the immersion tube (2) against axial movement if no sensor probe (4) is installed, **characterized in that** the safety device (10) is arranged on the outside of the immersion tube (2) and sealed tightly against the process medium inside the immersion tube.

2. Exchange assembly according to claim 1, **characterized in that** the safety device (10) comprises a safety slide (48) arranged inside the immersion tube (2), the safety slide is configured as a tubular sleeve surrounding the sensor probe (4), the safety slide is elastically biased towards the installation-access side of the sensor probe (4) by means of a spring (54) and pushed against a stop (58) in the immersion tube (2) when the safety slide is in the locked position, and that the safety slide is moved into the unlocked position against the force of the spring (54) when a sensor probe (4) is being installed; wherein the safety slide (48) at the opposite end from the installation-access side cooperates with a locking element (62) that is arranged with radial mobility in the immersion tube (2) so that, in the locked position of the safety slide (48), the inner end (66) of the locking element rests against the circumference of the safety slide (48) and the outer end (70) locks into a recess (72) of the housing (6), and in the unlocked position of the safety slide (48), the inner end (66) of the locking element recedes into a receiving groove (74) in the safety slide (48) and the outer end (70) is freed from the recess (72) of the housing (6).

3. Exchange assembly according to claim 2, **characterized in that** the locking element (62) is arranged in a section of the immersion tube (2) that is configured as a piston (28).

4. Exchange assembly according to claim 3, **characterized in that** the exchange assembly has an actuating device (87) operable by means of a fluid to retract and deploy the immersion tube (2), wherein the immersion tube (2) is movable back and forth between the retracted rest position and the deployed working position by means of the piston (28) in a cylindrical housing part (12), and wherein first and second fluid conduits (90, 88) are associated, respectively, with the two directions of movement.

5. Exchange assembly according to claim 4, **characterized in that**, if the safety slide (48) is in the locked position and no sensor probe (4) is installed or the sensor probe (4) is installed incorrectly, the safety slide connects the second fluid conduit (90), i.e., the conduit that serves to deploy the immersion tube (2), to a drain opening (102).

6. Exchange assembly according to claim 5, **characterized in that** a channel (96) is arranged on the outside of the safety slide (48) and sealed against the inside of the safety slide (48), that one end of said channel (96) connects to the second fluid conduit (90) and the other end is closed off by a seal ring (98, 100), that in the locked position of the safety slide (48), said seal ring leaves the channel (96) connected to the drain opening (102) and in the unlocked position, the seal ring closes the channel (96) off from the drain opening (102).

7. Exchange assembly according to claim 6, **characterized in that** the second fluid conduit (90) leads into a radial channel (92) in the piston (28) and said radial channel (92) is connected through an axial connecting channel (94) to the channel (96) of the safety slide (48).

8. Exchange assembly according to claim 6, **characterized in that** the second fluid conduit (90) leads into a locking element that has a passage channel leading into a connecting chamber of the safety slide when the latter is in the unlocked position, and the connecting chamber, in turn, communicates with the channel (96).

9. Exchange assembly according to one of the claims 4 to 8, **characterized in that** the fluid is compressed air.

10. Exchange assembly according to one of the claims 5 to 9, **characterized in that** the drain opening (102) leads into the ambient atmosphere.

11. Exchange assembly according to one of the claims 5 to 9, **characterized in that** the drain opening (102) is connected to the first fluid conduit (88).

12. Exchange assembly according to one of the claims 1 to 10, **characterized in that** the immersion tube (2) can be manually deployed and retracted, that the exchange assembly has a locking bolt (76) that can be moved from a locked position to an unlocked position by means of a handle (80), and that the locking bolt (76) passes radially through the housing (6) and protrudes into the immersion tube (2) to lock the latter into position, wherein the immersion tube has two locking recesses (82, 84) to lock the immersion tube (2) in the retracted and in the deployed position, respectively.

## Revendications

1. Armature interchangeable avec un capteur (4) qui est disposé dans un tube plongeur (2) de façon à pouvoir être enlevé, lequel peut être déplacé dans le sens axial en même temps que le capteur dans un boîtier (6) entre une position de repos rentrée et une position de travail sortie et plongeant dans un produit à traiter et à détecter, ainsi qu'avec un dispositif de sécurité (10), qui empêche un déplacement axial du tube plongeur (2) si aucun capteur (4) n'est inséré, **caractérisée en ce que** le dispositif de sécurité (10) est disposé sur le côté extérieur du tube plongeur (2) et conçu de façon étanche par rapport au produit à traiter sur le côté intérieur du tube plongeur.

2. Armature interchangeable selon la revendication 1, **caractérisée en ce que** le dispositif de sécurité (10) présente un coulisseau de sécurité (48) qui est disposé à l'intérieur du tube plongeur (2), entoure le capteur (4) à la façon d'une douille, est prétendu au moyen d'un ressort (54) contre le côté d'utilisation du capteur (4) et est au même niveau dans la position de blocage qu'une butée (58) dans le tube plongeur (2) et peut être déplacé dans la position de libération lors de l'insertion du capteur (4) contre la force de ressort, le coulisseau de sécurité (48) agissant conjointement avec un élément de blocage (62) sur le côté opposé au côté d'utilisation, lequel élément est disposé dans le tube plongeur (2) de façon coulissante sur le plan radial et est au même niveau dans la position de blocage du coulisseau de sécurité (48) avec son extrémité (66) intérieure que l'enveloppe du coulisseau de sécurité (48) et s'engage avec son extrémité (70) extérieure dans un évidement de blocage (72) dans le boîtier (6) ou s'engage, dans la position de libération du coulisseau de sécurité (48), avec l'extrémité (66) intérieure dans une rainure de logement (74) dans le coulisseau de sécurité (48) et se libère avec son extrémité (70) extérieure de l'évidement de blocage (72) du boîtier (6).

3. Armature interchangeable selon la revendication 2, **caractérisée en ce que** l'élément de blocage (62) est disposé dans une partie, conçue comme un piston (28), du tube plongeur (2).

4. Armature interchangeable selon la revendication 3, **caractérisée en ce qu'**elle présente un dispositif d'entraînement (87) actionné au moyen de fluide pour l'entrée et la sortie du tube plongeur (2), moyennant quoi le tube plongeur (2) peut être déplacé au moyen du piston (28) dans une partie du boîtier (12) cylindrique entre la position de repos rentrée et la position de travail sortie, une première et une seconde conduites pour fluide (90, 88) étant attribuées aux positions.

5. Armature interchangeable selon la revendication 4, **caractérisée en ce que** le coulisseau de sécurité (48) relie la seconde conduite pour fluide (90) pour la sortie du tube plongeur (2) à une dérivation (102) dans la position de blocage avec un capteur (4) non inséré ou inséré de façon incorrecte.

6. Armature interchangeable selon la revendication 5, **caractérisée en ce que** le coulisseau de sécurité (48) présente sur le côté extérieur un canal (96) rendu étanche par rapport au côté intérieur du coulisseau de sécurité (48), qui est en liaison sur une extrémité avec la seconde conduite pour fluide (90) et est fermé sur l'autre extrémité avec une bague d'étanchéité (98, 100), qui, dans la position de blocage du coulisseau de sécurité (48), libère une liaison entre le canal (96) et la dérivation (102) et la ferme dans la position de libération.

7. Armature interchangeable selon la revendication 6, **caractérisée en ce que** la seconde conduite pour fluide (90) débouche dans un canal (92) radial dans le piston (28), qui est relié par un canal de liaison (94) axial au canal (96) du coulisseau de sécurité (48).

8. Armature interchangeable selon la revendication 6, **caractérisée en ce que** la seconde conduite pour fluide (90) débouche dans un élément de blocage pourvu d'un canal de passage, qui débouche dans un évidement de liaison du coulisseau de sécurité, lorsque celui-ci se trouve dans la position de libération, cet évidement de liaison communiquant avec le canal (96).

9. Armature interchangeable selon l'une quelconque des revendications 4 à 8, **caractérisée en ce que** le fluide est de l'air comprimé.

10. Armature interchangeable selon l'une quelconque des revendications 5 à 9, **caractérisée en ce que** la dérivation (102) débouche dans l'environnement.

11. Armature interchangeable selon l'une quelconque des revendications 5 à 9, **caractérisée en ce que** la dérivation (102) est reliée à la première conduite pour fluide (88).

12. Armature interchangeable selon l'une quelconque des revendications 1 à 10, **caractérisée en ce que** le tube plongeur (2) peut être sorti et rentré à la main et présente un boulon d'arrêt (76) pouvant être déplacé au moyen d'une poignée (80) d'une position de blocage dans une position de libération, qui traverse le boîtier (6) dans le sens radial et dépasse dans le tube plongeur (2) dans la position de blocage, le tube plongeur présentant deux évidements d'arrêt (82, 84) disposés à distance l'un de l'autre, qui sont attribués à la position entrée et la position sortie du tube plongeur (2).
